# FASCICULE DE BREVET EUROPEEN

(11) **EP 2 368 306 B1**
(45) Date de publication et mention de la délivrance du brevet: **19.06.2013**
(21) Numéro de dépôt: 09768209.0
(22) Date de dépôt: 17.11.2009
(51) Int. Cl.: H02K 7/06, H02K 7/106, F16H 25/22

(54) **MOTEUR ELECTRIQUE POUR ACTIONNEUR ROTOLINEAIRE.**
ELEKTRISCHER MOTOR FÜR EINEN DREH-LINEAREN VERSTELLANTRIEB
ELECTRIC MOTOR FOR A ROTOLINEAR ACTUATOR

(30) Priorité: 22.12.2008 FR 0858941
(43) Date de publication de la demande: 28.09.2011
(73) Titulaire: SAGEM Défense Sécurité, 75015 Paris (FR)
(72) Inventeur: PIATON, Jérôme, F-75015 Paris (FR)
(74) Mandataire: Cabinet Plasseraud
(86) Numéro de dépôt international: PCT/FR2009/052203
(87) Numéro de publication internationale: WO 2010/072932

(56) Documents cités:
- EP-A- 1 070 827
- EP-A- 1 211 784
- EP-A- 1 940 012
- DE-A1-102005 048 287
- FR-A- 2 678 597

## Description

La présente invention concerne un moteur électrique et, en particulier, un moteur électrique susceptible d'animer un dispositif actionneur réversible du type vérin à vis et, plus précisément, un dispositif actionneur rotolinéaire à rouleaux satellites.

Ce type de dispositif actionneur trouve sa place dans de nombreuses applications et, pour certaines d'entre-elles, il peut être même être associé à un système de récupération d'énergie ou à un système de freinage électromagnétique, par exemple.

Le document FR 2 678 597, par exemple, décrit un dispositif actionneur utilisé dans le domaine de la robotique et en particulier un dispositif actionneur du type vérin électrique qui se substitue avantageusement au dispositif actionneur de type vérin hydraulique.

Ce vérin électrique comprend au moins un moteur électrique et un système de récupération de l'énergie cinétique qui provient de l'organe manipulé par ledit vérin, lequel système de récupération comprend des composants électroniques et un interrupteur pour la commande et la mise en oeuvre de ces moyens de récupération.

L'association d'un moteur électrique et d'un frein électromagnétique, comme décrit dans un autre document, EP 1 070 827, est couramment utilisée pour l'actionnement de volets ou stores, par exemple.

Tel que décrit dans ce document, le frein électromagnétique, du type à hystérésis, est installé directement sur l'arbre du moteur, entre ce dernier et le mécanisme réducteur et ce frein est mis en oeuvre, c'est-à-dire qu'il est actif ou inactif, par l'intermédiaire d'une commande qui fait circuler un courant dans un bobinage d'activation ou de désactivation de la fonction de freinage.

Ces opérations de récupération d'énergie et/ou de freinage, comme détaillées auparavant, s'accompagnent d'un effet complémentaire qui est une sorte d'amortissement des mouvements de l'organe qui est normalement manoeuvré par le moteur électrique, mais cette forme d'amortissement est dépendante d'une commande effective, c'est-à-dire qu'il faut une action positive de la part d'un opérateur ou autre pour la mettre en oeuvre électriquement.

Dans le cas de vérins du type hydraulique, cet effet d'amortissement est inhérent au matériel lui-même ; il découle aussi bien de la compressibilité du fluide hydraulique que de la conception générale du vérin. Cet amortissement n'a pas besoin d'être commandé ; il est présent intrinsèquement de façon permanente.

La présente invention propose, pour un moteur électrique, un effet complémentaire d'amortissement, et cet effet est analogue à celui qui découle de l'utilisation d'un vérin hydraulique, c'est-à-dire que cet effet d'amortissement est disponible en permanence, sans intervention d'un quelconque opérateur, et, surtout, en toutes circonstances.

La présente invention concerne un moteur électrique d'actionneur qui comporte, directement lié à sa structure, un système de freinage permanent, non débrayable, constamment opérationnel, lequel système de freinage absorbe une portion de l'énergie qui est susceptible d'être fournie par ledit moteur électrique ou, selon le cas, par un organe moteur associé audit moteur électrique.

On obtient ainsi un amortissement actif permanent pour tous les mouvements rapportés au moteur électrique et l'énergie qui en découle se dissipe sous forme de chaleur, laquelle énergie étant de l'ordre de 2 à 10% de l'énergie susceptible d'être fournie par ledit moteur électrique ou un autre organe moteur associé.

Toujours selon l'invention, le moteur électrique comprend, de façon classique, un rotor équipé d'aimants permanents et un stator équipé de bobinages, et le système de freinage est constitué d'un aménagement du seul circuit interne électromagnétique dudit stator de façon à produire, directement par induction magnétique, un phénomène de frottement à la fois sec, par hystérésis magnétique, et visqueux, par courants de Foucault.

Selon une disposition préférentielle de l'invention, le moteur électrique comprend un stator dont l'armature est constituée de deux parties:
- un empilage de tôles bobinées, avec des pertes faibles et,
- une culasse massive en forme de tube qui enveloppe ledit empilage de tôles, ladite culasse massive procurant des pertes importantes par hystérésis et par courants de Foucault.

Toujours selon l'invention, la culasse massive est réalisée en matériau du genre acier inoxydable.

Selon une autre disposition de l'invention, la culasse constitue directement le carter de protection du dispositif actionneur.

L'invention concerne également l'utilisation de ce type de moteur électrique, détaillé auparavant, pour l'animation d'un vérin à vis et en particulier un dispositif actionneur rotolinéaire du type à rouleaux satellites, lequel dispositif actionneur étant installé soit pour manoeuvrer directement une gouverne d'avion comme un aileron, soit pour suivre les mouvements de ladite gouverne qui est, dans ce cas, manoeuvré par un autre dispositif actionneur dont le moteur électrique est de type classique ou du type comportant un système de freinage intégré, selon l'invention.

L'invention sera encore détaillée à l'aide de la description suivante et des dessins annexés donnés à titre indicatif et dans lesquels :
- la figure 1 montre, de façon schématique, un dispositif actionneur rotolinéaire dont le moteur électrique est aménagé pour faire office d'amortisseur face aux mouvements qui lui sont imposés et qu'il subit en raison de son caractère réversible ;
- la figure 2 est une coupe de la structure de la partie électromagnétique du moteur montrant le rotor et le stator;
- la figure 3 est une vue schématique, montrant une gouverne, par exemple un aileron, commandée par des dispositifs actionneurs rotolinéaires qui sont interposés entre l'aileron et la structure d'une aile d'avion ;
- la figure 4 est une vue de dessus schématique montrant l'implantation de deux dispositifs actionneurs rotolinéaires interposés entre l'aileron et la structure de l'aile d'un avion.

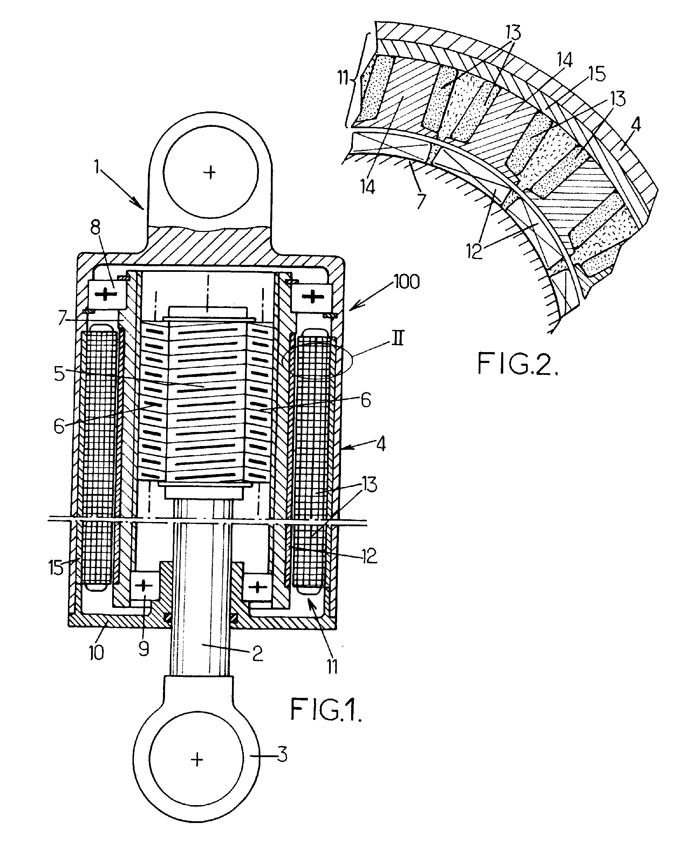

La figure 1 montre, de façon schématique, un dispositif actionneur rotolinéaire qui comprend un moteur électrique intégré, aménagé selon l'invention.

Ce dispositif actionneur se présente sous la forme d'un vérin qui comprend, à une extrémité: une chape 1, à l'autre extrémité: une tige 2 extractible munie d'un oeil 3 et, entre les deux, c'est-à-dire entre ladite chape 1 et ladite tige 2 : une enveloppe 4 cylindrique faisant office de carter, qui renferme le moteur électrique et le mécanisme de manoeuvre de ladite tige 2.

Cette tige 2 comporte, dans l'enveloppe 4 cylindrique, une partie filetée 5 sur laquelle circulent plusieurs rouleaux satellites 6. Ces rouleaux 6 sont organisés pour former une sorte de barillet qui est fixe axialement par rapport à la tige 2 ; ces rouleaux 6 sont eux-mêmes filetés avec le même pas que celui de la tige 2 mais ce pas est inversé par rapport à celui de ladite tige 2, et ils roulent sur la partie filetée d'un fourreau 7 qui est logée dans l'enveloppe 4 cylindrique de ce dispositif actionneur, lequel fourreau 7 fait office de rotor (repéré 7 également) pour le moteur électrique.

Ce rotor 7 est guidé en rotation par rapport à l'enveloppe 4 avec des organes de roulement 8 et 9 qui sont situés à ses extrémités : un organe de roulement 8 se situe près de la chape 1 et fait également office de butée axiale, et l'autre organe de roulement 9 est monté dans un couvercle 10 qui est assemblé sur l'extrémité de l'enveloppe 4 et qui réalise, en même temps, le guidage de la tige 2.

Le moteur électrique est donc constitué du rotor 7 et d'un stator 11 qui se loge dans l'enveloppe 4 du dispositif actionneur, et ce moteur électrique comporte un système de freinage associé à sa structure, lequel système de freinage, selon le mode de réalisation détaillé ci-après, est intégré directement au moteur électrique, sans apporter de modification à son aspect extérieur.

Le rotor 7 comporte, répartis sur sa périphérie, des aimants 12 permanents et le stator 11 comporte des bobinages 13 qui correspondent à des bobinages classiques de moteur électrique.

La figure 2 montre, de façon partielle et en coupe, le moteur électrique constitué de son rotor 7 et de son stator 11, lequel stator 11 est logé dans l'enveloppe 4 cylindrique de l'actionneur.

Le système de freinage découle d'un aménagement particulier du circuit magnétique du stator 11, c'est-à-dire de l'induit. Ce circuit magnétique du stator 11 s'organise dans une armature qui est constituée d'un assemblage de deux parties tubulaires intimement emboîtées l'une dans l'autre et, selon le mode de réalisation, ces deux parties sont logées dans l'enveloppe 4. Ces deux parties du stator 11 sont constituées:
- d'une sorte de manchon qui entoure le rotor 7 et qui comprend des dents 14, en forme de Té, constituées chacune d'un empilage de tôles en forme de Té sur lequel sont enroulés les bobinages 13 et,
- d'une culasse 15 qui enveloppe ledit manchon et qui est en contact avec la périphérie desdites dents 14, laquelle culasse 15, comme représenté figure 2, est interposée entre lesdits empilages de tôles et l'enveloppe 4.

Selon un autre mode de réalisation, l'enveloppe 4 peut constituer la culasse 15, laquelle culasse faisant directement office de carter pour le moteur électrique et le mécanisme du dispositif actionneur.

Les tôles utilisées pour le façonnage des dents 14 du stator 11 sont réalisées en un matériau approprié, du type FeSi, c'est-à-dire un matériau qui procure de faibles pertes aussi bien par hystérésis que par courants de Foucault.

L'espace entre les dents 14 de l'empilage de tôles est comblé, de façon classique, avec de la résine ou autre et l'ensemble forme le manchon qui coopère avec la culasse 15.

Cette culasse 15 se présente sous la forme d'un tube en matériau massif du genre acier inoxydable, laquelle culasse constitue un piètre circuit magnétique avec des pertes par courants de Foucault et hystérésis, lesquelles pertes, parfaitement exploitables dans le cadre de l'application détaillée ci-après, offrent un freinage et un amortissement de type à la fois visqueux et sec. Le freinage sec découle de l'hystérésis magnétique et le freinage visqueux découle des courants de Foucault.

Le déplacement des aimants 12 devant l'armature constituée des dents 14 et de la culasse 15 donne naissance à des phénomènes d'induction qui procurent un effet de freinage et d'amortissement du mouvement du rotor 7. Cet effet de freinage et d'amortissement est permanent puisqu'il découle de la conception du stator 11 du moteur électrique ; il n'est pas débrayable.

La puissance absorbée par le frein-amortisseur de ce moteur électrique amortisseur est de l'ordre de 2 à 10% de la puissance susceptible d'être fournie par ledit moteur électrique.

L'énergie produite par ce freinage lors des mouvements du rotor 7 se transforme en chaleur et se dissipe directement dans le moteur et son environnement. Comme mentionnée ci-dessus, cette énergie est relativement modeste car elle ne concerne qu'une très faible part, de 2 à 10% environ, de l'énergie susceptible d'être fournie par le moteur électrique lors de son utilisation.

L'enveloppe 4 forme un carter de protection et elle peut être réalisée en matériau plastique. Toutefois, dans le cas d'une extrême simplification, l'enveloppe 4 peut constituer directement, elle aussi, la culasse 15.

Cet effet d'amortissement est mis à profit, dans le cadre de l'invention, pour filtrer des vibrations qui proviennent directement de l'organe manoeuvré par le moteur électrique.

Dans le cas d'une application aéronautique de l'invention, la fonction amortissement des gouvernes est fondamentale, notamment pour des gouvernes comme les ailerons qui, dans certaines configurations, peuvent être le siège de vibrations bien connues sous le nom de « flutter ».

Le dispositif actionneur rotolinéaire selon l'invention est particulièrement adapté à la manoeuvre de gouvernes d'avions pour plusieurs raisons ; tout d'abord les mouvements de la tige 2 ont une amplitude relativement faible et, surtout, la vitesse de déplacement de la tige 2 est, elle aussi, relativement faible la plupart du temps. Pour des avions de lignes, elle est inférieure à 1mm/s pendant au moins 80% du temps de vol et elle est même inférieure à 2 mm/s pendant au moins 97% du temps de vol.

Le dispositif actionneur est connecté directement à l'aileron ; le couple du moteur électrique est important alors que le rapport de réduction et la vitesse de rotation dudit moteur électrique sont faibles.

L'amortissement procuré par le moteur selon l'invention est purement magnétique, indépendant de l'état du circuit électrique dudit moteur, lequel circuit étant soit ouvert ou soit en court-circuit. L'amortissement est plus important si accidentellement, par exemple, le circuit électrique du moteur électrique est en court-circuit.

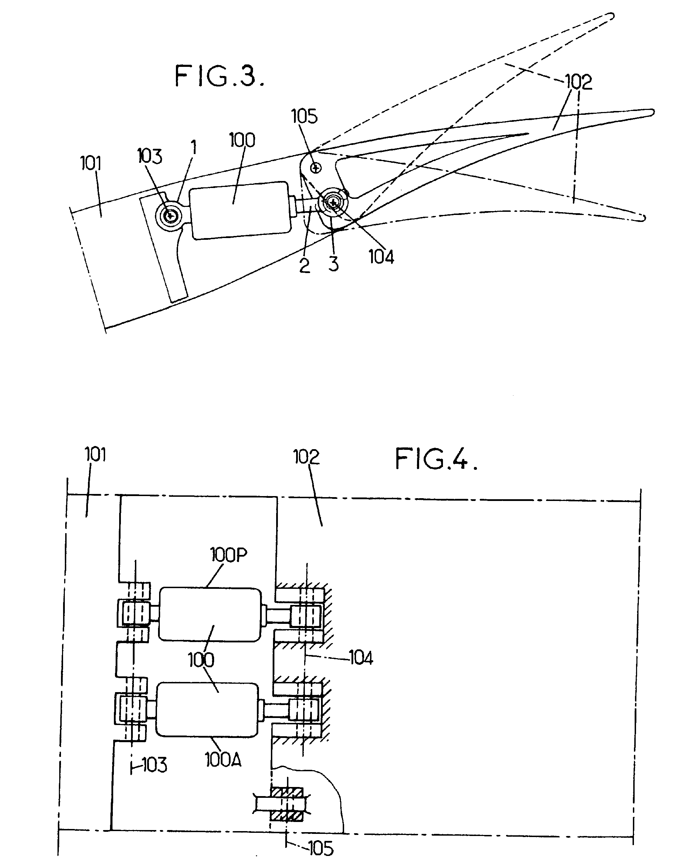

La figure 3 représente, de façon schématique, l'intégration d'un dispositif actionneur rotolinéaire 100 dans une aile d'avion et, en particulier entre la structure 101 de ladite aile et un aileron 102.

La chape 1 du dispositif actionneur 100 est articulée, par l'intermédiaire d'un axe 103 sur la structure 101 de l'aile et la tige 2 de l'actionneur, qui est mobile, est reliée à l'aileron 102 par son oeil 3 au moyen d'un axe 104, de façon à faire basculer ledit aileron 102 autour de son axe 105 qui est, lui aussi, solidaire de la structure 101 de l'aile.

Les mouvements imposés à ce dispositif actionneur passif provoquent, du fait de la conception du moteur électrique intégré à ce dispositif actionneur, une production d'énergie électrique ; cette production se dissipe directement dans le bobinage 13. Pour produire cette énergie, le moteur fonctionne comme un frein et cet effet de freinage est utilisé pour amortir les mouvements de l'aileron 102.

En fait, comme représenté figure 4, l'aileron 102 est susceptible d'être manoeuvré par plusieurs dispositifs actionneurs rotolinéaires, deux par exemple, et ces dispositifs actionneurs rotolinéaires 100 sont installés de la même façon entre l'aileron 102 et la structure 101 de l'aile, au moyen des axes 103 pour la structure 101 et 104 pour l'aileron 102.

Sur les deux dispositifs actionneurs rotolinéaires 100, l'un : le dispositif actionneur 100A est actif, et l'autre : le dispositif actionneur 100P est passif ; le dispositif actionneur passif 100P a un rôle de suppléant, ou de doublure. Il intervient en cas d'incident ou de panne touchant le dispositif actionneur 100A qui est normalement actif et sert d'organe de manoeuvre de l'aileron.

Généralement, un seul et même dispositif actionneur est utilisé ; l'autre dispositif est mis en service en cas de panne du premier dispositif actionneur. De ce fait, le dispositif actionneur 100A peut comporter un moteur électrique classique, sans frein-amortisseur et c'est le dispositif actionneur 100P, de secours, qui fait office de frein amortisseur, sachant qu'il peut, en cas de besoin, prendre le relai de l'autre dispositif actionneur 100A si une panne est survenue. L'énergie absorbée dans un tel montage se limite à l'énergie d'un seul dispositif actionneur frein-amortisseur.

Tous les mouvements engendrés par le dispositif actionneur actif 100A sont transmis, par l'intermédiaire de l'aileron, au dispositif actionneur passif 100P, lequel dispositif actionneur passif réagit du fait de sa réversibilité.

Cette faculté d'amortissement de ces dispositifs actionneurs découle directement de l'aménagement du moteur électrique et elle peut être exploitée dans tous les domaines d'utilisation de ce type de matériel.

L'invention offre ainsi une garantie d'amortissement des vibrations quel que soit l'état du circuit électrique du moteur et l'état de ses composants électroniques ; l'amortissement présente une disponibilité permanente et élevée ; le risque de perdre l'amortissement est très faible car il ne dépend pas d'une intervention extérieure.

Cette fonction amortissement est en quelque sorte garantie sauf à perdre les aimants 12 du rotor 7 ou à perdre l'aimantation de ces aimants.

## Revendications

1. Moteur électrique comprenant un rotor (7) équipé d'aimants (12) permanents et un stator (11) équipé de bobinages (13),
**caractérisé en ce qu'**il comporte un stator (11) dont l'armature est constituée de deux parties :
- un manchon qui comprend un empilage de tôle formant des dents (14) bobinées, avec des pertes faibles et,
- une culasse (15) massive en forme de tube qui enveloppe ledit manchon,
lequel stator (11) constitue un système de freinage permanent non débrayable, constamment opérationnel, dont l'action découle du seul aménagement du circuit interne électromagnétique dudit stator, lequel aménagement en deux parties produit, directement par induction magnétique, un phénomène de frottement à la fois sec, par hystérésis magnétique, et visqueux, par courants de Foucault.

2. Moteur électrique selon la revendication 1, **caractérisé en ce que** la culasse (15) est réalisée en matériau du genre acier inoxydable.

3. Moteur électrique selon la revendication 2, **caractérisé en ce que** la culasse (15) fait office de carter.

4. Utilisation d'un moteur électrique, selon l'une des revendications 1 à 3 pour l'animation d'un vérin à vis et en particulier un dispositif actionneur rotolinéaire (100) du type à rouleaux satellites (6), lequel dispositif actionneur étant installé soit pour manoeuvrer directement un gouverne d'avion, comme un aileron, soit pour suivre les mouvements de ladite gouverne qui est, dans ce cas, manoeuvré par un autre dispositif actionneur dont le moteur électrique est de type classique ou un moteur électrique selon l'une des revendications 1 à 3.

## Patentansprüche

1. Elektromotor, der einen mit Permanentmagneten (12) ausgestatteten Rotor (7) und einen mit Wicklungen (13) ausgestatteten Stator (11) umfasst,
**dadurch gekennzeichnet, dass** er einen Stator (11) enthält, dessen Anker aus zwei Teilen besteht:
- einer Hülse, die ein Blechpaket enthält, das gewickelte Zähne (14) mit geringen Verlusten formt, und
- einem massiven Joch (15) in Form eines Rohrs, das die Hülse umhüllt,
wobei der Stator (11) ein immer betriebsbereites, nicht ausrückbares Dauerbremssystem bildet, dessen Wirkung nur von der Anordnung des inneren elektromagnetischen Schaltkreises des Stators herrührt, wobei die zweiteilige Anordnung direkt durch magnetische Induktion ein sowohl trockenes, durch magnetische Hysterese, als auch viskoses durch Foucault-Ströme Reibungsphänomen erzeugt.

2. Elektromotor nach Anspruch 1, **dadurch gekennzeichnet, dass** das Joch (15) aus einem Material von der Art rostfreier Stahl hergestellt ist.

3. Elektromotor nach Anspruch 2, **dadurch gekennzeichnet, dass** das Joch (15) als Gehäuse dient.

4. Verwendung eines Elektromotors nach einem der Ansprüche 1 bis 3 zur Aktivierung einer Schraubenwinde, und insbesondere einer Schwenk-Linear-Antriebsvorrichtung (100) von der Art mit Satellitenrollen (6), wobei die Antriebsvorrichtung entweder zum direkten Betätigen eines Flugzeugruders, wie eines Querruders, oder zur Verfolgung der Bewegungen des Ruders installiert ist, das in diesem Fall von einer anderen Antriebsvorrichtung betätigt wird, deren Elektromotor von klassischer Art oder ein Elektromotor nach einem der Ansprüche 1 bis 3 ist.

## Claims

1. An electric motor comprising a rotor (7) fitted with permanent magnets (12) and a stator (11) fitted with windings (13),
**characterized in that** it comprises a stator (11) having an armature consisting of two parts:
- a sleeve which comprises a stack of laminations that form wound teeth (14) with low-losses, and
- a solid tube-shaped field frame (15) which surrounds said sleeve,
which stator (11) constitutes a continuous, non-disengageable, constantly operational braking system, the operation of which only results from the arrangement of the internal electromagnetic circuit of said stator, which arrangement in two parts directly produces by magnetic induction, a friction phenomenon that is both dry, through magnetic hysteresis, and viscous, through eddy currents.

2. An electric motor according to claim 1, **characterized in that** the field frame (15) is made of a stainless steel type of material.

3. An electric motor according to claim 2, **characterized in that** the field frame (15) serves as housing.

4. The use of an electric motor according to any one of claims 1 to 3, for driving a screw jack and in particular a rotolinear actuating device (100) of the type with satellite rollers (6), said actuating device being installed either for directly maneuvering an aircraft flight control surface such as an aileron, or for following the movements of said flight control surface which in this case is maneuvered by another actuating device having an electric motor that is conventional or an electric motor according to any one of claims 1 to 3.
